(19) Europäisches Patentamt
European Patent Office
Office européen des brevets

(11) EP 2 691 434 B1

(12) # EUROPÄISCHE PATENTSCHRIFT

(45) Veröffentlichungstag und Bekanntmachung des Hinweises auf die Patenterteilung:
**04.10.2017 Patentblatt 2017/40**

(21) Anmeldenummer: **12710097.2**

(22) Anmeldetag: **23.03.2012**

(51) Int Cl.:
***C08G 18/76*** *(2006.01)*

(86) Internationale Anmeldenummer:
**PCT/EP2012/055221**

(87) Internationale Veröffentlichungsnummer:
**WO 2012/130760 (04.10.2012 Gazette 2012/40)**

(54) **VERFAHREN ZUR HERSTELLUNG VON POLYURETHAN-WEICHSCHAUMSTOFFEN**

METHOD FOR PRODUCING FLEXIBLE POLYURETHANE FOAM MATERIALS

PROCÉDÉ DE PRODUCTION DE MOUSSES SOUPLES DE POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2011 EP 11159965**

(43) Veröffentlichungstag der Anmeldung:
**05.02.2014 Patentblatt 2014/06**

(73) Patentinhaber: **Covestro Deutschland AG**
**51373 Leverkusen (DE)**

(72) Erfinder:
- **JACOBS, Gundolf**
  **51503 Rösrath (DE)**
- **MEYER-AHRENS, Sven**
  **51375 Leverkusen (DE)**
- **KLESCZEWSKI, Bert**
  **51069 Köln (DE)**
- **SCHULZ, Angelika**
  **51373 Leverkusen (DE)**

(74) Vertreter: **Levpat**
**c/o Covestro AG**
**Gebäude 4825**
**51365 Leverkusen (DE)**

(56) Entgegenhaltungen:
**EP-A2- 0 222 453**
**EP-A2- 0 292 772**
**WO-A1-2008/058913**
**US-A1- 2003 149 232**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 691 434 B1

**Beschreibung**

Die vorliegende Erfindung betrifft ein Verfahren zur Herstellung von Polyurethan-Weichschaumstoffen, wobei eine Isocyanatkomponente (Komponente B) eingesetzt wird, die Polyethercarbonatpolyol enthält, sowie die Isocyanatkomponente selbst.

Die Herstellung von Polyethercarbonatpolyolen durch katalytische Umsetzung von Alkylenoxiden (Epoxiden) und Kohlendioxid in An- oder Abwesenheit von H-funktionellen Startersubstanzen (Startern) wird seit mehr als 40 Jahren intensiv untersucht Diese Reaktion z.B. unter Verwendung einer H-funktionellen Starterverbindung ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters kann aber variieren und ist nicht auf das in Schema (I) gezeigte Polyethercarbonatpolyol beschränkt. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Formel (I) gezeigte cyclische Carbonat (beispielsweise für R = $CH_3$ Propylencarbonat).

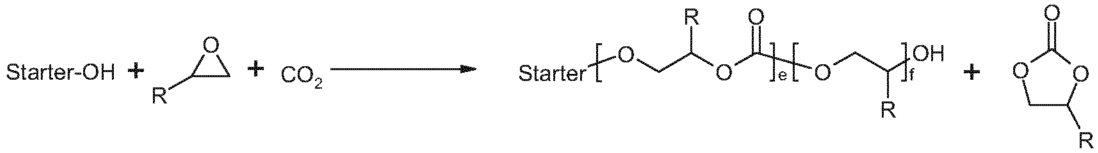 (I)

EP-A 0 222 453 offenbart ein Verfahren zur Herstellung von Polyethercarbonatpolyol aus Alkylenoxiden und Kohlendioxid unter Verwendung eines Katalysatorsystems aus DMC-Katalysator und einem Co-Katalysator wie Zinksulfat und die Herstellung von Polyurethan-Weichschaumstoffen, wobei das Polyethercarbonatpolyol als Bestandteil der Polyol-Komponente eingesetzt wurde.

WO-A 2008/058913 offenbart ein Verfahren zur von Polyurethan-Weichschaumstoffen, wobei ein Polyethercarbonatpolyol als Bestandteil der Polyol-Komponente eingesetzt wurde.

Für die Herstellung von Polyurethan-Weichschaumstoffen, insbesondere von Polyurethan-Weichformschaumstoffen, nach dem Kaltschaumverfahren werden Polyole benötigt, die eine höhere Reaktivität aufweisen, und somit im allgemeinen einen Anteil an primären OH-Gruppen von über 65 mol% aufweisen (vgl. Polyurethane, Kunststoffhandbuch, Dr. G. Oertel, Hrsg. G.W. Becker, D. Braun, 3. Aufl., 1993, Kapitel 5.3.1). Für das Kaltschaumverfahren geeignete Polyetherpolyole oder Polyethercarbonatpolyole sind daher in der Regel mit 5 bis 25 Gew.-% Ethylenoxid getippt (d.h. diese Polyole weisen 5 bis 25 Gew.-% endständige Blöcke von Ethylenoxid-Einheiten auf). Vermutlich aufgrund der hohen Reaktivität der DMC-Katalysatoren und des Ethylenoxids sind aber für die Herstellung von Polyurethan-Weichschaumstoffen einsetzbare Polyethercarbonatpolyole mit 5 bis 25 Gew.-% endständigen Ethylenoxid-Einheiten nicht mit Hilfe von DMC-Katalysatoren technisch herstellbar. Andererseits führen Polyethercarbonatpolyole, die keinen oder weniger als 5 Gew.-% an endständigen Blöcken von Ethylenoxid-Einheiten aufweisen, im Kaltschaumverfahren zu einem unbefriedigenden Ergebnis.

Aufgabe der vorliegenden Erfindung war es, ein Verfahren zur Herstellung von Polyurethan-Weichschaumstoffen nach dem Kaltschaumverfahren bereitzustellen, wobei Polyethercarbonatpolyole eingesetzt werden können, welche in Gegenwart von DMC-Katalysatoren hergestellte wurden. Insbesondere sollen auch Polyethercarbonatpolyole eingesetzt werden können, die keinen oder weniger als 5 Gew.-% an endständigen Blöcken von Ethylenoxid-Einheiten aufweisen. Die resultierenden Polyurethan-Weichschaumstoffe sollen zumindest vergleichbare mechanische Eigenschaften aufweisen wie aus Polyetherpolyolen und ohne Polyethercarbonatpolyolen hergestellte Polyurethan-Weichschaumstoffe.

Überraschend wurde gefunden, dass die zuvor genannte Aufgabe gelöst wird durch ein Verfahren zur Herstellung von Polyurethan-Weichschaumstoffen durch Umsetzung von Komponente A (Polyolformulierung) enthaltend

A1 100 Gew.-Teile Polyetherpolyol,

A2 0,5 bis 25 Gew.-Teile, bevorzugt 2 bis 5 Gew.-Teile (bezogen auf 100 Gew.-Teile der Komponente A1) Wasser und/oder physikalische Treibmittel,

A3 0,05 bis 10 Gew.-Teile, bevorzugt 0,2 bis 4 Gew.-Teile (bezogen auf 100 Gew.-Teile der Komponente A1) Hilfs- und Zusatzstoffe wie

a) Katalysatoren,

b) oberflächenaktive Zusatzstoffe,
c) Pigmente oder Flammschutzmittel,

A4 0 bis 10 Gew.-Teile, bevorzugt 0,05 bis 5 Gew.-Teile (bezogen auf 100 Gew.-Teile der Komponente A1) gegenüber Isocyanaten reaktionsfähigen Wasserstoffatomen aufweisenden Verbindungen mit einem Molekulargewicht von 62 - 399,

mit Komponente B enthaltend ein oder mehrere Polyisocyanate (B1) und ein oder mehrere Polyethercarbonatpolyole (B2), wobei die Herstellung bei einer Kennzahl von 50 bis 250, bevorzugt 70 bis 130, besonders bevorzugt 75 bis 115 erfolgt.

Gegenstand der Erfindung ist auch ein Verfahren zur Herstellung von Polyurethan-Weichschaumstoffen, dadurch gekennzeichnet, dass

(i) in einem ersten Schritt ein oder mehrere Alkylenoxide und Kohlendioxid in Gegenwart mindestens eines DMC-Katalysators an eine oder mehrere H-funktionellen Startsubstanzen angelagert werden ("Copolymerisation"),
(ii) in einem zweiten Schritt ein oder mehrere Polyisocyanate (B1) mit aus Schritt (i) resultierendem Polyethercarbonatpolyol (B2) umgesetzt werden zu einem NCO-terminierten Urethangruppen-haltigen Prepolymer (B), und
(iii) in einem dritten Schritt die Herstellung von Polyurethan-Weichschaumstoffen durch Umsetzung von Komponente A (Polyolformulierung) enthaltend

A1 100 Gew.-Teile Polyetherpolyol,
A2 0,5 bis 25 Gew.-Teile, bevorzugt 2 bis 5 Gew.-Teile (bezogen auf 100 Gew.-Teile der Komponente A1) Wasser und/oder physikalische Treibmittel,
A3 0,05 bis 10 Gew.-Teile, bevorzugt 0,2 bis 4 Gew.-Teile (bezogen auf 100 Gew.-Teile der Komponente A1) Hilfs- und Zusatzstoffe wie

a) Katalysatoren,
b) oberflächenaktive Zusatzstoffe,
c) Pigmente oder Flammschutzmittel,

A4 0 bis 10 Gew.-Teile, bevorzugt 0,05 bis 5 Gew.-Teile (bezogen auf 100 Gew.-Teile der Komponente A1) gegenüber Isocyanaten reaktionsfähigen Wasserstoffatomen aufweisenden Verbindungen mit einem Molekulargewicht von 62 - 399,

mit der aus Schritt (ii) resultierenden Komponente B erfolgt,
wobei die Herstellung der Polyurethan-Weichschaumstoffe bei einer Kennzahl von 50 bis 250, bevorzugt 70 bis 130, besonders bevorzugt 75 bis 115 erfolgt.

Gegenstand der Erfindung ist somit auch ein Verfahren zur Herstellung von NCO-terminierten Urethangruppen-haltigen Prepolymeren, dadurch gekennzeichnet, dass

(i) in einem ersten Schritt ein oder mehrere Alkylenoxide und Kohlendioxid in Gegenwart mindestens eines DMC-Katalysators an eine oder mehrere H-funktionellen Startsubstanzen angelagert werden ("Copolymerisation"), und
(ii) in einem zweiten Schritt ein oder mehreren Polyisocyanaten (B1) mit aus Schritt (i) resultierendem Polyethercarbonatpolyol (B2) umgesetzt werden.

Die erfindungsgemäßen Polyurethan-Weichschaumstoffe weisen vorzugsweise eine Rohdichte gemäß DIN EN ISO 3386-1-98 im Bereich von $\geq$ 10 kg/$m^3$ bis $\leq$ 300 kg/$m^3$, vorzugsweise von $\geq$ 30 kg/$m^3$ bis $\leq$ 100 kg/$m^3$ auf und im allgemeinen liegt deren Stauchhärte gemäß DIN EN ISO 3386-1-98 im Bereich von $\geq$ 0,5 kPa bis $\leq$ 20 kPa (bei 40% Verformung und 4. Zyklus).

<u>Komponente A (Polyolformulierung)</u>

Das erfindungsgemäße Verfahren zeichnet sich dadurch aus, dass die Polyolformulierung frei ist von Polyethercarbonatpolyolen. Die einzelnen Komponenten A1 bis A4 der Polyolformulierung werden nachfolgend erläutert.

Komponente A1

Ausgangskomponenten gemäß Komponente A1 sind Polyetherpolyole. Unter Polyetherpolyolen im Sinne der Erfindung werden Verbindungen bezeichnet, die Alkylenoxidadditionsprodukte von Starterverbindungen mit zerewitinoff-aktiven Wasserstoffatomen, also Polyetherpolyole mit einer Hydroxylzahl gemäß DIN 53240 von ≥ 15 mg KOH/g bis ≤ 80 mg KOH/g, vorzugweise von ≥ 20 mg KOH/g bis ≤ 60 mg KOH/g sind.

Für die Polyetherpolyole eingesetzte Starterverbindungen mit zerewitinoff-aktiven Wasserstoffatomen weisen meist Funktionalitäten von 2 bis 6 auf, vorzugsweise von 3, und vorzugsweise sind die Starterverbindungen hydroxyfunktionell. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff,. Vorzugsweise wird als Starterverbindung Glycerin und/oder Trimethylolpropan eingesetzt.

Geeignete Alkylenoxide sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Komponente A2

Als Komponente A2 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

Komponente A3

Als Komponente A3 werden Hilfs- und Zusatzstoffe verwendet wie

a) Katalysatoren (Aktivatoren),
b) oberflächenaktive Zusatzstoffe (Tenside), wie Emulgatoren und Schaumstabilisatoren insbesondere solche mit niedriger Emission wie beispielsweise Produkte der Tegostab® LF-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt

α) Harnstoff, Derivate des Harnstoffs und/oder
β) Amine und Aminoether, welche jeweils eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen.

Als Beispiele für besonders bevorzugte Katalysatoren seien genannt: (3-Dimethylaminopropylamin)-Harnstoff,

2-(2-Dimethylaminoethoxy)ethanol, N,N-Bis(3-dimethylaminopropyl)-N-isopropanolamin, N,N,N-Trimethyl-N-hydroxyethyl-bisaminoethylether und 3-D imethylaminopropylamin.

Komponente A4

Gegebenenfalls werden als Komponente A4 Verbindungen mit mindestens zwei gegenüber Isocyanaten reaktionsfähigen Wasserstoffatomen und einem Molekulargewicht von 32 bis 399 eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisenden Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A4 Ethanolamin, Diethanolamin, Triethanolamin, Sorbit und/oder Glycerin eingesetzt werden. Weitere Beispiele für Verbindungen gemäß Komponente A4 werden in EP-A 0 007 502, Seiten 16 - 17, beschrieben.

Komponente B

Komponente B im erfindungsgemäßen Sinne ist ein NCO-terminiertes urethangruppenhaltiges Prepolymer erhältlich durch Umsetzung von ein oder mehreren Polyisocyanate (B1) mit ein oder mehreren Polyethercarbonatpolyolen (B2). Das urethangruppenhaltiges Prepolymer gemäß Komponente B weist bevorzugt einen NCO-Gehalt von 5 bis 31 Gew.-%, besonders bevorzugt von 12 bis 31 Gew.-%, höchst bevorzugt von 25 bis 30 Gew.-% auf.

Bevorzugt werden dabei Komponente B1 und B2 zur Reaktion gebracht nach den dem Fachmann an sich bekannten Methoden. Beispielsweise können die Komponenten B1 und B2 bei einer Temperatur von 20 bis 80°C vermischt werden, wobei sich das urethangruppenhaltige Prepolymer bildet. Im allgemeinen ist die Reaktion der Komponente B1 und B2 nach 30 min bis 24 h abgeschlossen unter Bildung des NCO-terminierten urethangruppenhaltigen Prepolymers. Gegebenenfalls können dem Fachmann bekannte Aktivatoren zur Herstellung des NCO-terminierten urethangruppenhaltigen Prepolymers eingesetzt werden.

In einer besonders bevorzugten Ausführungsform wird das urethangruppenhaltige Prepolymer gemäß Komponente B mit einem NCO-Gehalt von 5 bis 31 Gew.-%, besonders bevorzugt von 12 bis 30 Gew.-%, höchst bevorzugt von 15 bis 29 Gew.-% hergestellt durch Umsetzung von

B1) Polyisocyanat bestehend aus mindestens einer Komponente ausgewählt aus der Gruppe bestehend aus 4,4'-Diphenylmethandiisocyanat, 2,4'-Diphenylmethandiisocyanat, 2,2'-Diphenylmethandiisocyanat und Polyphenylpolymethylenpolyisocyanat mit
B2) Polyethercarbonatpolyol.

Das urethangruppenhaltige Prepolymer gemäß Komponente B kann auch hergestellt werden, indem zunächst durch Umsetzung von einer ersten Teilmenge an ein oder mehreren Polyisocyanaten (B1) mit ein oder mehreren Polyethercarbonatpolyolen (B2) ein urethangruppenhaltiges Prepolymer erhalten wird, das dann in einem weiteren Schritt mit einer zweiten Teilmenge an ein oder mehreren Polyisocyanaten (B1) vermischt wird unter Erhalt des urethangruppenhaltigen Prepolymers gemäß Komponente B mit einem NCO-Gehalt von 5 bis 31 Gew.-%, besonders bevorzugt von 12 bis 30 Gew.-%, höchst bevorzugt von 15 bis 29 Gew.-%.

Komponente B1

Geeignete Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel (I)

$$Q(NCO)_n, \qquad (I)$$

in der

n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt, besonders bevorzugt wird als Polyisocyanat eine Mischung enthaltend 4,4'-Diphenylmethandiisocyanat, 2,4'-Diphenylmethandiisocyanat und Polyphenylpolymethylenpolyisocyanat eingesetzt.

Komponente B2

Als Komponente B2 wird Polyethercarbonatpolyol eingesetzt. Die Polyethercarbonatpolyol werden vorzugsweise hergestellt durch Anlagerung ein oder mehrere Alkylenoxide und Kohlendioxid in Gegenwart mindestens eines DMC-Katalysators an eine oder mehrere H-funktionellen Startsubstanzen ("Copolymerisation"). Bevorzugt haben die Polyethercarbonatpolyole haben eine OH-Funktionalität von 1 bis 8, besonders bevorzugt von 2 bis 6 und ganz besonders bevorzugt von 2 bis 4. Das Molekulargewicht beträgt bevorzugt 400 bis 10000 g/mol und besonders bevorzugt 500 bis 6000 g/mol.

Beispielsweise ist das Verfahren zur Herstellung von Polyethercarbonatpolyol dadurch gekennzeichnet, dass

(α) die H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt werden,

(β) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) ein oder mehrere Alkylenoxide und Kohlendioxid zu der aus Schritt (β) resultierenden Mischung zugesetzt werden, wobei die in Schritt (γ) eingesetzten Alkylenoxide gleich oder verschieden sein können von den bei Schritt (β) eingesetzten Alkylenoxiden.

Als Aktivierung im Sinne der Erfindung wird ein Schritt bezeichnet, bei dem eine Teilmenge Alkylenoxidverbindung, gegebenenfalls in Gegenwart von $CO_2$, zum DMC-Katalysator gegeben wird und dann die Zugabe der Alkylenoxidverbindung unterbrochen wird, wobei aufgrund einer folgenden exothermen chemischen Reaktion eine Temperaturspitze ("Hotspot") und/oder ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Hotspot. Im Allgemeinen kann dem Aktivierungsschritt ein Schritt zum Trocknen des DMC-Katalysators und ggf. des Starters durch erhöhte Temperatur und/oder reduziertem Druck vorgelagert sein, wobei dieser Schritt der Trocknung nicht Teil des Aktivierungsschrittes im Sinne der vorliegenden Erfindung ist.

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltrlisopropoxysilan. Vorzugsweise werden als Alkylenoxide Ethylenoxid und/oder Propylenoxid, insbesondere Propylenoxid eingesetzt.

Als geeignete **H-funktionelle Startsubstanz** können Verbindungen mit für die Alkoxylierung aktiven H-Atomen eingesetzt werden. Für die Alkoxylierung aktive Gruppen mit aktiven H-Atomen sind beispielsweise -OH, -$NH_2$ (primäre Amine), -NH- (sekundäre Amine), -SH und - $CO_2H$, bevorzugt sind -OH und -$NH_2$, besonders bevorzugt ist -OH. Als H-funktionelle Startersubstanz wird beispielsweise eine oder mehrere Verbindungen ausgewählt aus der Gruppe bestehend aus ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt.. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton.

Die H-funktionelle Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionelle Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol,

Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des weiteren können als H-funktionelle Startersubstanzen Polycarbonatdiole eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atome pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (II),

$$HO\text{-}(CH_2)_x\text{-}OH \qquad (II)$$

wobei x eine Zahl von 1 bis 20, bevorzugt eine gerade Zahl von 2 bis 20 ist. Beispiele für Alkohole gemäß Formel (II) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein Molekulargewicht Mn im Bereich von 62 bis 4500 g/mol und eine Funktionalität von 2 bis 3 und insbesondere ein Molekulargewicht Mn im Bereich von 62 bis 3000 g/mol und eine Funktionalität von 2 bis 3.

Die Herstellung der Polyethercarbonatpolyole erfolgt durch katalytische Anlagerung von Kohlendioxid und Alkylenoxiden an H-funktionellen Startersubstanzen. Unter "H-funktionell" wird im Sinne der Erfindung die Anzahl an für die Alkoxylierung aktiven H-Atomen pro Molekül der Starterverbindung verstanden.

DMC-Katalysatoren zur Verwendung in der Homopolymerisation von Epoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die erfindungsgemäßen DMC-Katalysatoren werden erhalten, indem man

(i) im ersten Schritt eine wässrige Lösung eines Metallsalzes mit der wässrigen Lösung eines Metallcyanidsalzes in Gegenwart eines oder mehrer organischen Komplexliganden, z.B. eines Ethers oder Alkohols, umsetzt,

(ii) wobei im zweiten Schritt der Feststoff aus der aus (i) erhaltenen Suspension durch bekannte Techniken (wie Zentrifugation oder Filtration) abgetrennt wird,

(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(iv) wobei anschließend der erhaltene Feststoff, gegebenenfalls nach Pulverisierung, bei Temperaturen von im allgemeinen 20 - 120°C und bei Drücken von im allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Lösung von Zinkchlorid (bevorzugt im überschuß bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (III),

$$M(X)_n \qquad (III)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$.
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M_r(X)_3 \qquad (IV)$$

wobei

M ausgewählt ist aus den Metallkationen $Fe^{3+}$, $Al^{3+}$, $Co^{3+}$ und $Cr^{3+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_s \qquad (V)$$

wobei

M ausgewählt ist aus den Metallkationen $Mo^{4+}$, $V^{4+}$ und $W^{4+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (VI),

$$M(X)_t \qquad (VI)$$

wobei

M ausgewählt ist aus den Metallkationen $Mo^{6+}$ und $W^{6+}$

X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t ist 3, wenn X = Sulfat, Carbonat oder Oxalat ist und

t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VII)

$$(Y)_aM'(CN)_b(A)_c \qquad (VII)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),

A ausgewählt ist aus einem oder mehreren Anionen der Gruppe bestehend aus Halogenide (d..h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (VIII)

$$M_x[M'_{x'}(CN)_y]_z \qquad (VIII),$$

worin M wie in Formel (III) bis (VI) und

M' wie in Formel (VII) definiert ist, und

x, x', y und z sind ganzzahlig und so gewählt, dass die Elektronenneutralität der Doppelmetallcyanidverbindung gegeben ist.

Vorzugsweise ist

x=3, x'=1, y=6 und z=2,

M = Zn(II), Fe(II), Co(II) oder Ni(II) und

M'= Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyether, Polyester,

Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpynolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, also mindestens ein molares Verhältnis von Metallsalz zu Metallcyanidsalz von 2,25 zu 1,00.) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen..Vorzugsweise wird in einem ersten Waschschritt (iii-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 bis 100°C und bei Drücken von im allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Zur Herstellung der Polyurethan-Weichschaumstoffen werden die Reaktionskomponenten nach dem an sich

bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Polyurethan-Weichschaumstoffe können als Form- oder auch als Blockschaumstoffe hergestellt werden, vorzugsweise werden die Polyurethan-Weichschaumstoffe als Formschaumstoffe im Kaltschaumverfahren hergestellt. Gegenstand der Erfindung sind daher ein Verfahren zur Herstellung der Polyurethan-Weichschaumstoffe, die nach diesen Verfahren hergestellten Polyurethan-Weichschaumstoffe, die nach diesen Verfahren hergestellten Polyurethanweichblockschaumstoffe bzw. Polyurethanweichformschaumstoffe, die Verwendung der Polyurethan-Weichschaumstoffe zur Herstellung von Formteilen sowie die Formteile selbst. Die nach der Erfindung erhältlichen Polyurethan-Weichschaumstoffe finden beispielsweise folgende Anwendung: Möbelpolsterungen, Textileinlagen, Matratzen, Automobilsitze, Kopfstützen, Armlehnen, Schwämme und Bauelementen.

Die Kennzahl (Index) gibt das prozentuale Verhältnis der tatsächlich eingesetzten Isocyanat-Menge zur stöchiometrischen, d.h. für die Umsetzung der OH-Äquivalente berechnete Menge an Isocyanat-Gruppen (NCO)-Menge an.

$$\text{Kennzahl} = [(\text{Isocyanat-Menge eingesetzt}) : (\text{Isocyanat-Menge berechnet})] \bullet 100 \qquad (IX)$$

Die vorliegende Erfindung wird anhand der nachfolgenden Beispiele weiter erläutert.

Beispiele

Die verwendeten Materialien und Abkürzungen haben die folgende Bedeutung:

DABCO® (Triethylendiamin; 2,2,2-Diazabicyclooctan): Aldrich

- A1-1: Polyetherpolyol mit einer OH-Zahl von 28 mg KOH/g, hergestellt in Gegenwart von KOH als Katalysator durch Addition von Propylenoxid und Ethylenoxid im Verhältnis 85 zu 15 unter Verwendung von Glycerin als Starter mit 85 mol% primären OH-Gruppen.
- A1-2: Polyetherpolyol mit einer OH-Zahl von 37 mg KOH/g, hergestellt durch Addition von Propylenoxid und Ethylenoxid im Verhältnis 27 zu 73 unter Verwendung von Glycerin als Starter mit ca. 83 mol% primären OH-Gruppen.
- A3-1 Tegostab® B 8715LF, Zubereitung organo-modifizierter Polysiloxane, Firma Evonik Goldschmidt.
- A3-2 Jeffcat® ZR50, Aminkatalysator der Fa. Huntsman Corp. Europe.
- A3-3 Dabco® NE300, Aminkatalysator der Fa. Air Products.
- A4-1 Diethanolamin
- B1-1 Mischung enthaltend 59,2 Gew.-% 4,4'-Diphenylmethandiisocyanat, 20,2 Gew.-% 2,4'-Diphenylmethandiisocyanat und 17,8 Gew.-% Polyphenylpolymethylenpolyisocyanat ("Mehrkern-MDI") mit einem NCO-Gehalt von 32,5 Gewichts-%.
- B1-2 Mischung enthaltend 69,0 Gew.-% 4,4'-Diphenylmethandiisocyanat, 9,3 Gew.-% 2,4'-Diphenylmethandiisocyanat und 20,5 Gew.-% Polyphenylpolymethylenpolyisocyanat ("Mehrkern-MDI") mit einem NCO-Gehalt von 32,5 Gewichts-%.
- B2-2 Polyetherpolyol mit einer OH-Zahl von 56 mg KOH/g und < 10 mol% primären OH-Gruppen, hergestellt in Gegenwart von KOH als Katalysator durch Addition von Propylenoxid unter Verwendung von Glycerin als Starter.
- B2-3 Polyetherpolyol mit einer OH-Zahl von 56 mg KOH/g und < 10 mol% primären OH-Gruppen, hergestellt in Gegenwart eines DMC-Katalysators durch Addition von Propylenoxid unter Verwendung von Glycerin als Starter.

Die Analysen wurden wie folgt durchgeführt:

Dynamische Viskosität: Rheometer MCR 51 der Firma Anton Paar entsprechend DIN 53019. NCO-Gehalt: anhand der Norm DIN 53185

Die Rohdichte wurde gemäß DIN EN ISO 3386-1-98 bestimmt.
Die Stauchhärte wurde gemäß DIN EN ISO 3386-1-98 (bei 40% Verformung und 4. Zyklus) bestimmt.

Die Zugfestigkeit und Bruchdehnung wurden bestimmt gemäß DIN EN ISO 1798.

Die Druckverformungsreste DVR 50% (Ct) und DVR 75% (Ct) wurden bestimmt gemäß DIN EN ISO 1856-2001-03 bei 50% bzw. 75% Verformung.
Der Härteverlust nach 3 h Alterung im Dampfautoklav bei 105 °C (HALL) wurde bestimmt nach der Methode GM6293M, ASTM D3574-C, J.
Die Weiterreißfestigkeit wurde bestimmt gemäß DIN EN ISO 8067.

Das Gewichts- und Zahlenmittel des Molekulargewichts der Polyethercarbonatpolyole wurde mittels Gelpermeations-Chromatographie (GPC) bestimmt. Es wurde vorgegangen nach DIN 55672-1: "Gelpermeationschromatographie,Teil 1 - Tetrahydrofuran als Elutionsmittel". Dabei wurden Polystyrolproben bekannter Molmasse zur Kalibrierung verwendet.

Die OH-Zahl (Hydroxylzahl) wurde in Anlehnung an DIN 53240-2 bestimmt, wobei jedoch Pyridin anstelle von THF/Dichlormethan als Lösungsmittel verwendet wurde. Es wurde mit 0,5 molarer ethanolischer KOH titriert (Endpunktserkennung mittels Potentiometrie). Als Prüfsubstanz fungierte Rizinusöl mit durch Zertifikat festgelegter OH-Zahl. Die Angabe der Einheit in "mg/g" bezieht sich auf mg[KOH]/g[Polyol].

Bestimmung des molaren Anteils der primären OH-Gruppen: mittels $^1$H-NMR (Bruker DPX 400, Deuterochloroform)

| | |
|---|---|
| Hydroxylzahl: | anhand der Norm DIN 53240 |
| Säurezahl: | anhand der Norm DIN 53402 |

Das Verhältnis der primären und sekundären OH-Gruppen wurde mittels $^1$H-NMR (Bruker DPX 400, Deuterochloroform) ermittelt.

Der Anteil an eingebautem $CO_2$, im resultierenden Polyethercarbonatpolyol sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

Cyclisches Carbonat (welches als Nebenprodukt gebildet wurde) mit Resonanz bei 4,5 ppm, Carbonat, resultierend aus im Polyethercarbonatpolyol eingebautem Kohlendioxid mit Resonanzen bei 5,1 bis 4,8 ppm, nicht abreagiertes PO mit Resonanz bei 2,4 ppm, Polyetherpolyol (d.h. ohne eingebautes Kohlendioxid) mit Resonanzen bei 1,2 bis 1,0 ppm.

Der Molenanteil des im Polymer eingebauten Carbonats in der Reaktionsmischung wird nach Formel (X) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol

Unter Berücksichtigung der relativen Intensitäten wurde gemäß der folgenden Formel (X) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1\text{-}4{,}8) + F(2{,}4) + 0{,}33 * F(1{,}2\text{-}1{,}0) + 0{,}25 * F(1{,}6\text{-}1{,}52)} * 100 \qquad (X)$$

Der Gewichtsanteil (in Gew.-%) polymer-gebundenen Carbonats (LC') in der Reaktionsmischung wurde nach Formel (XI) berechnet,

$$LC' = \frac{[F(5{,}1-4{,}8) - F(4{,}5)] * 102}{N} * 100\% \qquad (XI)$$

wobei sich der Wert für N ("Nenner" N) nach Formel (XII) berechnet:

$$N = [F(5,1-4,8) - F(4,5)] * 102 + F(4,5) * 102 + F(2,4) * 58 + 0,33 * F(1,2-1,0) * 58 + 0,25 * F(1,6-1,52) * 146 \quad (XII)$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol.

Der Gewichtsanteil (in Gew.-%) an cyclischem Carbonat (CC') in der Reaktionsmischung wurde nach Formel (XIII) berechnet,

$$CC' = \frac{F(4,5) * 102}{N} * 100\% \quad (XIII)$$

wobei sich der Wert für N nach Formel (XII) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starters (trifunktionelles Poly(oxypropylen)polyol mit OH-Zahl = 235 mg KOH/g) sowie aus der Reaktion des Starters mit Propylenoxid resultiert, das unter $CO_2$-freien Bedingungen zugegeben wurde, wurde hierbei nicht berücksichtigt).

Herstellung des Polyethercarbonatpolyols B2-1:

In einen 12 Liter Druckreaktor mit Gasdosierungseinrichtung wurden 1,3 g getrockneter DMC-Katalysator (hergestellt gemäß Beispiel 6 von WO-A 01/80994), 0,6 g 4-tert-butyl-Catechol sowie 1010 g eines getrockneten trifunktionellen Poly(oxypropylen)polyols mit OH-Zahl = 235 mg KOH/g als Starter vorgelegt. Der Reaktor wurde auf 130 °C aufgeheizt und durch wiederholtes Beaufschlagen von Stickstoff auf ca. 5 bar und nachfolgenden Entspannen auf ca. 1 bar inertisiert. Dieser Vorgang wurde 3-mal durchgeführt. In den Reaktor wurden bei 130 °C und Abwesenheit von $CO_2$ 255 g Propylenoxid (PO) mit 10 g/min eindosiert. Das Anspringen der Reaktion machte sich durch eine Temperaturspitze ("Hotspot") und durch Druckabfall auf etwa den Ausgangsdruck (ca. 1 bar) bemerkbar. Nach dem ersten Druckabfall wurden 203 g PO mit 10 g/min und dann 191 g PO mit 10 g/min eindosiert, wodurch es wiederum jeweils zu einer Temperaturspitze und zu einem Druckabfall kam. Nachdem der Reaktor mit 50 bar $CO_2$ beaufschlagt worden war, wurden 505 g PO mit 10 g/min eindosiert, wodurch es nach einer weiteren Wartezeit zu einer Temperaturspitze kam. Gleichzeitig dazu fing der Druck an Kohlendioxid $CO_2$ zu fallen an. Nachfolgend wurde der $CO_2$-Druc auf 90 bar erhöht. Der Druck während des weiteren Versuchs wurde so geregelt, dass bei Absinken unter den Sollwert neues $CO_2$ zugegeben wurde. Erst danach wurde das restliche Propylenoxid (3506 g) kontinuierlich innerhalb von 12 Stunden in den Reaktor gepumpt, während nach 10 Minuten in Schritten von 5°C pro fünf Minuten die Temperatur von 130 °C auf 105 °C gesenkt wurde. Nach beendeter PO-Zugabe wurde noch 60 Minuten bei 105 °C und dem oben angegebenen Druck weitergerührt. Durch Dünnschichtverdampfung wurden abschließend leichtflüchtige Bestandteile aus dem Produkt abgetrennt.
Die OH-Zahl des resultierenden Polyethercarbonatpolyols B2-1 lag bei 59 mg KOH/g und wies eine Viskosität (23 °C) von 9610 mPas auf. Der $CO_2$-Gehalt im Produkt lag bei 17,5 Gew.-%.

Herstellung des NCO-terminierten urethangruppenhaltigen Prepolymers B-1:

In einem ersten Schritt wurden 1825 g der Komponente B1-2 mit 15 g Polyetherpolyol A1-2 und mit 160 g des Polyethercarbonatpolyols B2-1 2 min mit einem Rührer vermischt und anschließend 24 h bei 25 °C stehen gelassen. Anschließend wurde das resultierende Produkt für 3 min vermischt und der NCO-Gehalt bestimmt.
NCO-Gehalt: 26,2 Gew.-%
In einem zweiten Schritt wurden 2000 g des aus dem ersten Schritt resultierenden Produkts mit 2000 g der Komponente

B1-1 2 min mit einem Rührer vermischt und anschließend 1 h bei 25 °C stehen gelassen. Anschließend wurde das resultierende Prepolymer 2 min mit einem Rührer vermischt und der NCO-Gehalt bestimmt.
NCO-Gehalt: 29,4 Gew.-%

Herstellung des NCO-terminierten urethangruppenhaltigen Prepolymers B-2 (Vergleich):

In einem ersten Schritt wurden 1825 g der Komponente B1-2 mit 15 g Polyetherpolyol A1-2 und mit 160 g des Polyetherpolyols B2-2 2 min mit einem Rührer vermischt und anschließend 24 h bei 25 °C stehen gelassen. Anschließend wurde das resultierende Produkt für 3 min vermischt und der NCO-Gehalt bestimmt.
NCO-Gehalt: 26,3 Gew.-%
In einem zweiten Schritt wurden 2000 g des aus dem ersten Schritt resultierenden Produkts mit 2000 g der Komponente B1-1 2 min mit einem Rührer vermischt und anschließend 1 h bei 25 °C stehen gelassen. Anschließend wurde das resultierende Prepolymer 2 min mit einem Rührer vermischt und der NCO-Gehalt bestimmt.
NCO-Gehalt: 29,4 Gew.-%

Herstellung des NCO-terminierten urethangruppenhaltigen Prepolymers B-3 (Vergleichsbeispiel):

In einem ersten Schritt wurden 1825 g der Komponente B1-2 mit 15 g Polyetherpolyol A1-2 und mit 160 g des Polyetherpolyols B2-3 2 min mit einem Rührer vermischt und anschließend 24 h bei 25 °C stehen gelassen. Anschließend wurde das resultierende Produkt für 3 min vermischt und der NCO-Gehalt bestimmt.
NCO-Gehalt: 26,3 Gew.-%

In einem zweiten Schritt wurden 2000 g des aus dem ersten Schritt resultierenden Produkts mit 2000 g der Komponente B1-1 2 min mit einem Rührer vermischt und anschließend 1 h bei 25 °C stehen gelassen. Anschließend wurde das resultierende Prepolymer 2 min mit einem Rührer vermischt und der NCO-Gehalt bestimmt.
NCO-Gehalt: 29,4 Gew.-%

Herstellung der Isocyanatmischung B-4 (Vergleichsbeispiel):

1825 g der Komponente B1-2 und 2000 g der Komponente B1-1 wurden 2 min mit einem Rührer vermischt und anschließend 1 h bei 25 °C stehen gelassen. Anschließend wurde die Mischung 2 min mit einem Rührer vermischt und der NCO-Gehalt bestimmt.
NCO-Gehalt: 32,5 Gew.-%

Herstellung von Polyurethan-Weichformschaumstoffen

In für die Herstellung von Polyurethan-Weichformschaumstoffen im Kaltschaumverfahren üblicher Verarbeitungsweise nach dem Einstufenverfahren werden die in den Beispielen der in der nachfolgenden Tabelle 1 aufgeführten Einsatzstoffe miteinander zur Reaktion gebracht. Das Reaktionsgemisch wird in eine auf 60 °C geheizte Metallform des Volumens 9,7 L eingebracht und nach 4 min entformt. Die Einsatzmenge der Rohstoffe wurde so gewählt, dass eine berechnete Formteildichte von etwa 51 kg/m3 resultiert. In der Tabelle 1 angegeben ist die tatsächlich erhaltene Formteildichte, welche nach DIN EN ISO 3386-1-98 bestimmt wurde.

Tabelle 1: Herstellung und Beurteilung der Polyurethan-Weichformschaumstoffe

| | | 1 (Vgl.) | 2 (Vgl.) | 3 | 4 (Vgl.) |
|---|---|---|---|---|---|
| A1-1 | [Gew.Tle] | 94,03 | 94,03 | 94,03 | 94,03 |
| B2-1 | | | | | 4,74 |
| A1-2 | | | | | 0,44 |
| Wasser | [Gew.Tle] | 3,43 | 3,43 | 3,43 | 3,43 |
| A3-1 | [Gew.Tle] | 0,94 | 0,94 | 0,94 | 0,94 |
| A3-2 | [Gew.Tle] | 0,38 | 0,38 | 0,38 | 0,38 |
| A3-3 | [Gew.Tle] | 0,09 | 0,09 | 0,09 | 0,09 |
| A4-1 | [Gew.Tle] | 1,13 | 1,13 | 1,13 | 1,13 |
| Kennzahl | | 90 | 90 | 90 | 90 |

(fortgesetzt)

| | | 1 (Vgl.) | 2 (Vgl.) | 3 | 4 (Vgl.) |
|---|---|---|---|---|---|
| B-1 | [MV] | | | 59,19 | |
| B-2 | [MV] | 59,15 | | | |
| B-3 | [MV] | | 59,15 | | |
| B-4 | | | | | 54,0 |
| Eigenschaften | | | | | |
| Rohdichte | [kg/m$^3$] | 51,0 | 51,5 | 51,3 | 51,4 |
| Stauchhärte | [kPa] | 7,7 | 8,0 | 7,9 | 6,1 |
| Zugfestigkeit | [kPa] | 115 | 107 | 124 | 109 |
| Bruchdehnung | [%] | 83,0 | 80,5 | 90,0 | 78,0 |
| DVR 50% | Ct[%] | 6,9 | 7,2 | 7,1 | 8,1 |
| DVR 75% | Ct[%] | 8,7 | 9,0 | 9,6 | 11,4 |
| HALL | [%] | -9,5 | -9,8 | -9,3 | |
| Weiterreißfestigkeit | [N/mm] | 0,232 | 0,258 | 0,261 | |

Abkürzungen:
Vgl. = Vergleichsbeispiel;
Gew.Tle. = Gewichtsteile;
MV = Gewichtsverhältnis der Komponente A zu Komponente B bei der angegeben Kennzahl und bezogen auf 100 Gewichtsteile Komponente A; im Fall der Vergleichsbeispiele 1 und 2 wird die in der Polyolformulierung eingesetzte Komponente B2-1 (Polyricinolsäureester) zu Komponente A und somit auch zu der Summe der Gewichtsteilen der Komponente A hinzugerechnet.

Der erfindungsgemäße Polyurethan-Weichformschaumstoff (Beispiel 3), in dem das Polyethercarbonatpolyol in Form eines Prepolymers verarbeitet wurde, ließen sich Weichformschaumstoffe in guter Qualität der Oberfläche und mit guten mechanischen Eigenschaften herstellen. Das Vergleichsbeispiel 4 ist weicher und weist eine höhere Druckverformung (DVR) als der erfindungsgemäße Polyurethan-Weichformschaumstoff (Beispiel 3) auf.

## Patentansprüche

1. Verfahren zur Herstellung von Polyurethan-Weichschaumstoffen durch Umsetzung von Komponente A enthaltend

    A1 100 Gew.-Teile Polyetherpolyol,
    A2 0,5 bis 25 Gew.-Teile (bezogen auf 100 Gew.-Teile der Komponente A1) Wasser und/oder physikalische Treibmittel,
    A3 0,05 bis 10 Gew.-Teile (bezogen auf 100 Gew.-Teile der Komponente A1) Hilfs- und Zusatzstoffe wie

        a) Katalysatoren,
        b) oberflächenaktive Zusatzstoffe,
        c) Pigmente oder Flammschutzmittel,

    mit NCO-terminierten urethangruppenhaltigen Prepolymer (Komponente B) enthaltend ein oder mehrere Polyisocyanate (B1) und ein oder mehrere Polyethercarbonatpolyole (B2), wobei die Herstellung bei einer Kennzahl von 50 bis 250 erfolgt.

2. Verfahren zur Herstellung von Polyurethan-Weichschaumstoffen, **dadurch gekennzeichnet, dass**

    (i) in einem ersten Schritt ein oder mehrere Alkylenoxide und Kohlendioxid in Gegenwart mindestens eines DMC-Katalysators an eine oder mehrere H-funktionellen Startsubstanzen angelagert werden,

(ii) in einem zweiten Schritt ein oder mehrere Polyisocyanate (B1) mit aus Schritt (i) resultierendem Polyethercarbonatpolyol (B2) umgesetzt werden zu einem NCO-terminierten Urethangruppen-haltigen Prepolymer (B), und
(iii) in einem dritten Schritt die Herstellung von Polyurethan-Weichschaumstoffen durch Umsetzung von Komponente A (Polyolformulierung) enthaltend

A1 100 Gew.-Teile Polyetherpolyol,
A2 0,5 bis 25 Gew.-Teile, bevorzugt 2 bis 5 Gew.-Teile (bezogen auf 100 Gew.-Teile der Komponente A1) Wasser und/oder physikalische Treibmittel,
A3 0,05 bis 10 Gew.-Teile, bevorzugt 0,2 bis 4 Gew.-Teile (bezogen auf 100 Gew.-Teile der Komponente A1) Hilfs- und Zusatzstoffe wie

d) Katalysatoren,
e) oberflächenaktive Zusatzstoffe,
f)

Pigmente oder Flammschutzmittel,

mit der aus Schritt (ii) resultierenden Komponente B erfolgt, wobei die Herstellung der Polyurethan-Weichschaumstoffe bei einer Kennzahl von 50 bis 250.

**3.** Verfahren gemäß Anspruch 1 oder 2, wobei die Komponente A frei ist von Polyethercarbonatpolyolen.

**4.** Verfahren gemäß einem der Ansprüche 1 bis 3, wobei Komponente A zusätzlich

A4 0 bis 10 Gew.-Teile (bezogen auf 100 Gew.-Teile der Komponente A1) gegenüber Isocyanaten reaktionsfähigen Wasserstoffatomen aufweisenden Verbindungen mit einem Molekulargewicht von 62 - 399 enthalten kann.

**5.** Verfahren gemäß einem der Ansprüche 1 bis 4, wobei als Polyetherpolyol A1 ein oder mehrere Alkylenoxidadditionsprodukte von Starterverbindungen mit zerewitinoff-aktiven Wasserstoffatomen eingesetzt werden.

**6.** Verfahren gemäß einem der Ansprüche 1 bis 5, wobei als Polyetherpolyol A1 ein oder mehrere Alkylenoxidadditionsprodukte erhältlich durch Umsetzung von mindestens einer Starterverbindung ausgewählt aus der Gruppe bestehend aus Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol und methylolgruppenhaltige Kondensate aus Formaldehyd und Phenol, methylolgruppenhaltige Kondensate aus Formaldehyd Melamin, methylolgruppenhaltige Kondensate aus Formaldehyd und Harnstoff, mit mindestens einem Alkylenoxid ausgewählt aus der Gruppe bestehend aus Ethylenoxid, Propylenoxid, 1,2-Butylenoxid, 2,3-Butylenoxid und Styroloxid eingesetzt werden.

**7.** Verfahren gemäß einem der Ansprüche 1 bis 6, wobei als Komponente B1 mindestens eine Verbindung ausgewählt aus der Gruppe bestehend aus 2,4-Toluylendiisocyanat, 2,6-Toluylendiisocyanat, 4,4'-Diphenylmethandiisocyanat, 2,4'-Diphenylmethandiisocyanat, 2,2'-Diphenylmethandiisocyanat und Polyphenylpolymethylenpolyisocyanat eingesetzt wird.

**8.** Verfahren gemäß einem der Ansprüche 1 bis 7, wobei das NCO-terminierte urethangruppenhaltigen Prepolymer (B) erhältlich ist durch Umsetzung von

B1) Polyisocyanat bestehend aus mindestens einer Komponente ausgewählt aus der Gruppe bestehend aus 4,4'-Diphenylmethandiisocyanat, 2,4'-Diphenylmethandiisocyanat, 2,2'-Diphenylmethandiisocyanat und Polyphenylpolymethylenpolyisocyanat mit
B2) ein oder mehreren Polyethercarbonatpolyolen.

**9.** Verfahren gemäß einem der Ansprüche 1 bis 8, wobei Polyethercarbonatpolyol (B2) mit einer OH-Funktionalität von 2 bis 6 eingesetzt werden.

**10.** Verfahren gemäß Anspruch 1, wobei das Polyethercarbonatpolyol (B2) durch Anlagerung ein oder mehrerer Alkylenoxide und Kohlendioxid in Gegenwart mindestens eines DMC-Katalysators an eine oder mehrere H-funktionellen Startsubstanzen erhältlich ist.

**11.** Verfahren gemäß einem der Ansprüche 1 bis 10, wobei die Polyurethan-Weichschaumstoffe als Formschaumstoffe im Kaltschaumverfahren hergestellt werden.

**12.** Polyurethan-Weichschaumstoffe mit einer Rohdichte gemäß DIN EN ISO 3386-1-98 im Bereich von ≥ 10 kg/m$^3$ bis ≤ 300 kg/m$^3$ und einer Stauchhärte gemäß DIN EN ISO 3386-1-98 im Bereich von ≥ 0,5 kPa bis ≤ 20 kPa (bei 40% Verformung und 4. Zyklus) erhältlich nach einem Verfahren gemäß einem der Ansprüche 1 bis 11.

**13.** Verfahren zur Herstellung von NCO-terminierten Urethangruppen-haltigen Prepolymeren **dadurch gekennzeichnet, dass**

(i) in einem ersten Schritt ein oder mehrere Alkylenoxide und Kohlendioxid in Gegenwart mindestens eines DMC-Katalysators an eine oder mehrere H-funktionellen Startsubstanzen angelagert werden, und
(ii) in einem zweiten Schritt ein oder mehrere Polyisocyanate (B1) mit aus Schritt (i) resultierendem Polyethercarbonatpolyol (B2) umgesetzt werden.

**14.** NCO-terminiertes urethangruppenhaltiges Prepolymer erhältlich durch Umsetzung von ein oder mehreren Polyisocyanate (B1) mit ein oder mehreren Polyethercarbonatpolyolen (B2), **dadurch gekennzeichnet, dass** das Polyethercarbonatpolyol (B2) hergestellt wird durch Anlagerung ein oder mehrere Alkylenoxide und Kohlendioxid in Gegenwart mindestens eines DMC-Katalysators an eine oder mehrere H-funktionelle Startersubstanzen.

**15.** NCO-terminiertes urethangruppenhaltigen Prepolymer gemäß Anspruch 14 erhältlich durch Umsetzung von

B1) Polyisocyanat bestehend aus mindestens einer Komponente ausgewählt aus der Gruppe bestehend aus 4,4'-Diphenylmethandiisocyanat, 2,4'-Diphenylmethandiisocyanat, 2,2'-Diphenylmethandiisocyanat und Polyphenylpolymethylenpolyisocyanat mit
B2) ein oder mehreren Polyethercarbonatpolyolen.

## Claims

**1.** A method for producing flexible polyurethane foams by reaction of component A comprising

A1 100 parts by weight polyether polyol,
A2 0.5 to 25 parts by weight (based on 100 parts by weight of component A1) water and/or physical blowing agents,
A3 0.05 to 10 parts by weight (based on 100 parts by weight of component A1) auxiliary substances and additives such as

a) catalysts,
b) surface-active additives,
c) pigments or flame retardants,

with NCO-terminated, urethane group-comprising prepolymer (component B) comprising one or more polyisocyanates (B1) and one or more polyether carbonate polyols (B2),
the production taking place at an index of 50 to 250.

**2.** A method for producing flexible polyurethane foams, **characterised in that**

(i) in a first step, one or more alkylene oxides and carbon dioxide are added to one or more H-functional starter substances in the presence of at least one DMC catalyst,
(ii) in a second step, one or more polyisocyanates (B1) are reacted with polyether carbonate polyol (B2) resulting from step (i) to form an NCO-terminated, urethane group-comprising prepolymer (B), and
(iii)in a third step, the production of flexible polyurethane foams takes place by reaction of component A (polyol formulation) comprising

A1 100 parts by weight polyether polyol,
A2 0.5 to 25 parts by weight, preferably 2 to 5 parts by weight (based on 100 parts by weight of component A1) water and/or physical blowing agents,
A3 0.05 to 10 parts by weight, preferably 0.2 to 4 parts by weight (based on 100 parts by weight of component A1) auxiliary substances and additives such as

d) catalysts,
e) surface-active additives,
f) pigments or flame retardants,

with component B resulting from step (ii),
wherein the production of the flexible polyurethane foams at an index of 50 to 250.

**3.** The method according to claim 1 or 2, wherein component A is free from polyether carbonate polyols.

**4.** The method according to one of claims 1 to 3, wherein component A can additionally comprise

A4 0 to 10 parts by weight (based on 100 parts by weight of component A1) isocyanate-reactive compounds comprising hydrogen atoms with a molecular weight of 62 - 399.

**5.** The method according to one of claims 1 to 4, wherein one or more alkylene oxide addition products of starter compounds with Zerewitinoff-active hydrogen atoms are used as polyether polyol A1.

**6.** The method according to one of claims 1 to 5, wherein one or more alkylene oxide addition products, obtainable by reaction of at least one starter compound selected from the group consisting of propylene glycol, ethylene glycol, diethylene glycol, dipropylene glycol, 1,2-butanediol, 1,3-butanediol, 1,4-butanediol, hexanediol, pentanediol, 3-methyl-1,5-pentanediol, 1,12-dodecanediol, glycerol, trimethylolpropane, triethanolamine, pentaerythritol, sorbitol, sucrose, hydroquinone, pyrocatechol, resorcinol, bisphenol F, bisphenol A, 1,3,5-trihydroxybenzene and methylol group-comprising condensates of formaldehyde and phenol, methylol group-comprising condensates of formaldehyde melamine, methylol group-comprising condensates of formaldehyde and urea, with
at least one alkylene oxide selected from the group consisting of ethylene oxide, propylene oxide, 1,2-butylene oxide, 2,3-butylene oxide and styrene oxide, are used as polyether polyol A1.

**7.** The method according to one of claims 1 to 6, wherein at least one compound selected from the group consisting of 2,4-toluene diisocyanate, 2,6-toluene diisocyanate, 4,4'-diphenylmethane diisocyanate, 2,4'-diphenylmethane diisocyanate, 2,2'-diphenylmethane diisocyanate and polyphenyl polymethylene polyisocyanate is used as component B1.

**8.** The method according to one of claims 1 to 7, wherein the NCO-terminated, urethane group-comprising prepolymer (B) is obtainable by reaction of

B1) polyisocyanate consisting of at least one component selected from the group consisting of 4,4'-diphenylmethane diisocyanate, 2,4'-diphenylmethane diisocyanate, 2,2'-diphenylmethane diisocyanate and polyphenyl polymethylene polyisocyanate with
B2) one or more polyether carbonate polyols.

**9.** The method according to one of claims 1 to 8, wherein polyether carbonate polyol (B2) with an OH functionality of 2 to 6 are used.

**10.** The method according to claim 1, wherein the polyether carbonate polyol (B2) is obtainable by addition of one or more alkylene oxides and carbon dioxide to one or more H-functional starter substances in the presence of at least one DMC catalyst.

**11.** The method according to one of claims 1 to 10, wherein the flexible polyurethane foams are produced as moulded foams in the cold foaming process.

**12.** Flexible polyurethane foams with a density according to DIN EN ISO 3386-1-98 in the range of ≥ 10 $kg/m^3$ to ≤ 300 $kg/m^3$ and a compressive strength according to DIN EN ISO 3386-1-98 in the range of ≥ 0.5 kPa to ≤ 20 kPa (at

40% deformation and 4th cycle) obtainable by a method according to one of claims 1 to 11.

**13.** A method for producing NCO-terminated, urethane group-comprising prepolymers, **characterised in that**

(i) in a first step, one or more alkylene oxides and carbon dioxide are added to one or more H-functional starter substances in the presence of at least one DMC catalyst, and
(ii) in a second step, one or more polyisocyanates (B1) are reacted with polyether carbonate polyol (B2) resulting from step (i).

**14.** An NCO-terminated, urethane group-comprising prepolymer obtainable by reaction of one or more polyisocyanates (B1) with one or more polyether carbonate polyols (B2), **characterized in that** the polyether carbonate polyol (B2) is produced by adding one or more alkylene oxides and carbon dioxide to one or more H-functional starter substances in the presence of at least one DMC catalyst.

**15.** The NCO-terminated, urethane group-comprising prepolymer according to claim 14 obtainable by reaction of

B1) polyisocyanate consisting of at least one component selected from the group consisting of 4,4'-diphenylmethane diisocyanate, 2,4'-diphenylmethane diisocyanate, 2,2'-diphenylmethane diisocyanate and polyphenyl polymethylene polyisocyanate with
B2) one or more polyether carbonate polyols.

**Revendications**

**1.** Procédé de fabrication de mousses souples de polyuréthane par mise en réaction d'un composant A contenant

A1 100 parties en poids de polyéther-polyol,
A2 0,5 à 25 parties en poids (par rapport à 100 parties en poids du composant A1) d'eau et/ou d'agents gonflants physiques,
A3 0,05 à 10 parties en poids (par rapport à 100 parties en poids du composant A1) d'adjuvants et d'additifs, tels que

a) des catalyseurs,
b) des additifs tensioactifs,
c) des pigments ou des agents ignifuges,

avec un prépolymère contenant des groupes uréthane à terminaison NCO (composant B) contenant un ou plusieurs polyisocyanates (B1) et un ou plusieurs polyéther-carbonate-polyols (B2), la fabrication ayant lieu à un indice de 50 à 250.

**2.** Procédé de fabrication de mousses souples de polyuréthane, **caractérisé en ce que**

(i) lors d'une première étape, un ou plusieurs oxydes d'alkylène et du dioxyde de carbone sont additionnés en présence d'au moins un catalyseur DMC sur une ou plusieurs substances de départ à fonction H,
(ii) lors d'une deuxième étape, un ou plusieurs polyisocyanates (B1) sont mis en réaction avec le polyéther-carbonate-polyol (B2) résultant de l'étape (i) pour former un prépolymère (B) contenant des groupes uréthane à terminaison NCO, et
(iii) lors d'une troisième étape, la fabrication de mousses souples de polyuréthane a lieu par mise en réaction du composant A (formulation de polyol) contenant

A1 100 parties en poids de polyéther-polyol,
A2 0,5 à 25 parties en poids, de préférence 2 à 5 parties en poids (par rapport à 100 parties en poids du composant A1) d'eau et/ou d'agents gonflants physiques,
A3 0,05 à 10 parties en poids, de préférence 0,2 à 4 parties en poids (par rapport à 100 parties en poids du composant A1) d'adjuvants et d'additifs, tels que

d) des catalyseurs,
e) des additifs tensioactifs,

f) des pigments ou des agents ignifuges,

avec le composant B résultant de l'étape (ii), la fabrication des mousses souples de polyuréthane à un indice de 50 à 250.

**3.** Procédé selon la revendication 1 ou 2, dans lequel le composant A est exempt de polyéther-carbonate-polyols.

**4.** Procédé selon l'une quelconque des revendications 1 à 3, dans lequel le composant A peut en outre contenir A4 0 à 10 parties en poids (par rapport à 100 parties en poids du composant A1) de composés comprenant des atomes d'hydrogène réactifs avec les isocyanates, ayant un poids moléculaire de 62 à 399.

**5.** Procédé selon l'une quelconque des revendications 1 à 4, dans lequel un ou plusieurs produits d'addition d'oxyde d'alkylène de composés de départ contenant des atomes d'hydrogène actifs selon Zerewitinoff sont utilisés en tant que polyéther-polyol A1.

**6.** Procédé selon l'une quelconque des revendications 1 à 5, dans lequel un ou plusieurs produits d'addition d'oxyde d'alkylène pouvant être obtenus par mise en réaction d'au moins un composé de départ choisi dans le groupe constitué par le propylène glycol, l'éthylène glycol, le diéthylène glycol, le dipropylène glycol, le 1,2-butanediol, le 1,3-butanediol, le 1,4-butanediol, l'hexanediol, le pentanediol, le 3-méthyl-1,5-pentanediol, le 1,12-dodécanediol, la glycérine, le triméthylolpropane, la triéthanolamine, la pentaérythrite, le sorbitol, la saccharose, l'hydroquinone, la brenzcatéchine, la résorcine, le bisphénol F, le bisphénol A, le 1,3,5-trihydroxybenzène et les condensats contenant des groupes méthylol de formaldéhyde et de phénol, les condensats contenant des groupes méthylol de formaldéhyde et de mélamine, les condensats contenant des groupes méthylol de formaldéhyde et urée, avec au moins un oxyde d'alkylène choisi dans le groupe constitué par l'oxyde d'éthylène, l'oxyde de propylène, l'oxyde de 1,2-butylène, l'oxyde de 2,3-butylène et l'oxyde de styrène, sont utilisés en tant que polyéther-polyol A1.

**7.** Procédé selon l'une quelconque des revendications 1 à 6, dans lequel au moins un composé choisi dans le groupe constitué par le diisocyanate de 2,4-toluylène, le diisocyanate de 2,6-toluylène, le diisocyanate de 4,4'-diphénylméthane, le diisocyanate de 2,4'-diphénylméthane, le diisocyanate de 2,2'-diphénylméthane et le polyisocyanate de polyphénylpolyméthylène est utilisé en tant que composant B1.

**8.** Procédé selon l'une quelconque des revendications 1 à 7, dans lequel le prépolymère (B) contenant des groupes uréthane à terminaison NCO peut être obtenu par mise en réaction de

B1) un polyisocyanate constitué d'au moins un composant choisi dans le groupe constitué par le diisocyanate de 4,4'-diphénylméthane, le diisocyanate de 2,4'-diphénylméthane, le diisocyanate de 2,2'-diphénylméthane et le polyisocyanate de polyphénylpolyméthylène avec
B2) un ou plusieurs polyéther-carbonate-polyols.

**9.** Procédé selon l'une quelconque des revendications 1 à 8, dans lequel des polyéther-carbonate-polyols (B2) ayant une fonctionnalité OH de 2 à 6 sont utilisés.

**10.** Procédé selon la revendication 1, dans lequel le polyéther-carbonate-polyol (B2) peut être obtenu par addition d'un ou de plusieurs oxydes d'alkylène et de dioxyde de carbone en présence d'au moins un catalyseur DMC sur une ou plusieurs substances de départ à fonction H.

**11.** Procédé selon l'une quelconque des revendications 1 à 10, dans lequel les mousses souples de polyuréthane sont fabriquées sous la forme de mousses façonnées par le procédé de moussage à froid.

**12.** Mousses souples de polyuréthane ayant une densité brute selon DIN EN ISO 3386-1-98 dans la plage allant de ≥ 10 kg/m$^3$ à ≤ 300 kg/m$^3$ et une résistance à la compression selon DIN EN ISO 3386-1-98 dans la plage allant de ≥ 0,5 kPa à ≤ 20 kPa (à 40 % de déformation et 4 cycles), pouvant être obtenues par un procédé selon l'une quelconque des revendications 1 à 11.

**13.** Procédé de fabrication de prépolymères contenant des groupes uréthane à terminaison NCO, **caractérisé en ce que**

(i) lors d'une première étape, un ou plusieurs oxydes d'alkylène et du dioxyde de carbone sont additionnés en présence d'au moins un catalyseur DMC sur une ou plusieurs substances de départ à fonction H, et

(ii) lors d'une deuxième étape, un ou plusieurs polyisocyanates (B1) sont mis en réaction avec le polyéther-carbonate-polyol (B2) résultant de l'étape (i).

**14.** Prépolymère contenant des groupes uréthane à terminaison NCO pouvant être obtenu par mise en réaction d'un ou de plusieurs polyisocyanates (B1) avec un ou plusieurs polyéther-carbonate-polyols (B2), **caractérisé en ce que** le polyéther-carbonate polyol (B2) est fabriqué par addition d'un ou de plusieurs oxydes d'alkylène et de dioxyde de carbone en présence d'au moins un catalyseur DMC sur une ou plusieurs substances de départ à fonction H.

**15.** Prépolymère contenant des groupes uréthane à terminaison NCO selon la revendication 14, pouvant être obtenu par mise en réaction de

B1) un polyisocyanate constitué d'au moins un composant choisi dans le groupe constitué par le diisocyanate de 4,4'-diphénylméthane, le diisocyanate de 2,4'-diphénylméthane, le diisocyanate de 2,2'-diphénylméthane et le polyisocyanate de polyphénylpolyméthylène avec
B2) un ou plusieurs polyéther-carbonate-polyols.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0222453 A
- WO 2008058913 A
- EP 0007502 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- EP 355000 A


### In der Beschreibung aufgeführte Nicht-Patentliteratur


- Kunststoff-Handbuch. Carl-Hanser-Verlag, 1993, vol. VII, 139-265